# EUROPÄISCHE PATENTSCHRIFT

(11) **EP 3 398 790 B1**
(45) Veröffentlichungstag und Bekanntmachung des Hinweises auf die Patenterteilung: **29.12.2021**
(21) Anmeldenummer: 18178395.2
(22) Anmeldetag: 02.08.2012
(51) Int. Cl.: B44C 5/04, B05D 7/00, B32B 27/08, B32B 27/32, C09D 11/10, E04F 15/10, B05D 1/28

(54) **PVC-KUNSTSTOFFPANEEL**
PVC PLASTIC PANEL
PANNEAU DE MATIÈRE PLASTIQUE PVC

(30) Priorität: 02.04.2012 WO PCT/EP2012/055967
(43) Veröffentlichungstag der Anmeldung: 07.11.2018
(62) Teilanmeldung aus: 12741023.1
(73) Patentinhaber: Xylo Technologies AG, 9052 Niederteufen (CH)
(72) Erfinder: DÖHRING, Dieter, 01561 Großenhain (DE)
(74) Vertreter: Mader, Joachim

(56) Entgegenhaltungen:
- WO-A1-2008/061791
- WO-A1-2008/122668
- DE-A1- 19 702 476
- DE-A1-102009 044 092
- DE-A1-102010 011 602
- DE-U1-202004 018 710
- US-A1- 2004 071 978
- US-A1- 2004 146 695
- US-A1- 2004 219 339

## Beschreibung

### 1. Gebiet der Erfindung

Die vorliegende Erfindung betrifft ein verbessertes Kunstoffpaneel, insbesondere basierend auf einer Trägerschicht aus PVC, sowie ein Verfahren zu dessen Herstellung.

### 2. Hintergrund der Erfindung

Polyvinylchlorid wird seit langem zur Herstellung von Fußbodenbelägen verwendet. Polyvinylchlorid (PVC) ist ein thermoplastischer Werkstoff, der ohne die Zugabe von Hilfsstoffen hart und spröde ist. Die mechanischen Eigenschaften von PVC lassen sich jedoch durch die Zugabe geeigneter Hilfsstoffe, wie etwa Weichmacher, Füllstoffe, Färbemittel, Stabilisatoren, etc. in einem weite Bereich einstellen. Aus diesem Grund wird hierin unter dem Begriff "PVC" kein reines Polyvinylchlorid verstanden, sondern PVC mit den üblicherweise hinzugefügten und für den praktischen Einsatz notwendigen Hilfsstoffen.

Ein typisches Beispiel aus dem Stand der Technik ist in der Druckschrift DE 10 2006 058 655 A1 beschrieben. In dieser Druckschrift wird ein Bodenpaneel in der Form eines mehrschichtigen, rechteckigen Laminats mit einer Trägerschicht aus einem weichem Polyvinylchlorid und einer auf der Polyvinylchloridschicht angeordneten Dekorpapierschicht offenbart. Die Aufbringung einer Dekorpapierbahn ist technisch aufwendig und mit erheblichen Kosten verbunden.

Die Druckschrift US 2004 / 0146695 A1 beschreibt rechteckige PVC Kacheln, die individuell geschnitten, dann gefräst und an zwei benachbarten Ecken geprägt wurden, um das Erscheinungsbild zu haben, dass jede Kachel Fugenkanten an jeder Kante aufweist.

Die Druckschrift WO 2008 / 122 668 A1 beschreibt ein Verfahren und eine Vorrichtung zum Herstellen von laminierten Fußbodenpaneelen, wobei der Träger aus einem Holz-Kunststoff-Verbundwerkstoff besteht.

Die DE 10 2010 011602 A1 beschreibt ein Verfahren zur Herstellung einer Dekorplatte, bei dem die Trägerplatte zunächst mit einer Kunststofffolie kaschiert und anschließend die Folie bedruckt wird. Die Tinte wird mit UV-Strahlung gehärtet und danach wird die Platte mit einem UV härtbaren Lack versehen.

Aus der DE 10 2006 029 963 A1 ist ein Bodenbelag aus Polyvinylchlorid bekannt, der mit einer strapazierfähigen Lackschicht beschichtet ist, um die Haltbarkeit des PVC-Bodenbelags zu verbessern. Die Lackschicht basiert auf einem Acrylatharz und soll mittels Strahlung ausgehärtet werden. Der Kern dieser Druckschrift liegt in der Zugabe von elektrisch leitfähigen Substanzen in das Acrylatharz, um den fertigen Bodenbelag mit antistatischen und/oder elektrisch leitenden Eigenschaften zu versehen.

Die WO 2008/061791 A1 desselben Anmelders stellt eine Weiterentwicklung einer Lackbeschichtung dar. Der Inhalt dieser Druckschrift wird hiermit durch in Bezugnahme vollständig aufgenommen. Der Kern der Verbesserung dieser Druckschrift liegt darin, dass auf die Oberfläche eines Paneels zwei flüssige, unterschiedliche Polymerschichten Nass-in-Nass aufgetragen werden, so dass eine teilweise Vermischung der Beschichtungsmittel stattfindet. Diese beiden Nass-in-Nass aufgetragenen Schichten werden dann gemeinsam ausgehärtet, wobei die ausgehärtete resultierende Beschichtung aufgrund der teilweisen Durchmischung einen Härtegradient aufweist, wobei die Härte der Beschichtung mit zunehmender Tiefe von der Oberfläche der resultierenden Beschichtung her gesehen abnimmt.

Im Lichte dieser bekannten PVC Beläge stellt sich die vorliegende Erfindung die Aufgabe, ein Paneel, insbesondere ein Wand-, Decken-oder Fußbodenpaneel bereitzustellen, das eine Trägerschicht aus einem Kunststoffmaterial umfasst, wobei ein solches kostengünstiger und auf einfachere Weise hergestellt werden soll als dies beispielsweise aus der DE 10 2006 058 655 A1 bekannt ist. Eine weitere Aufgabe liegt in der Bereitstellung eines derartigen Paneels, dass eine verbesserte Haltbarkeit und qualitativ besonders hochwertige dekorative Muster aufweist.

Diese und andere Aufgaben, die beim Lesen der vorliegenden Beschreibung noch genannt werden oder vom Fachmann erkannt werden können, werden mit einem Paneel nach Anspruch 1 und einem Verfahren zu dessen Herstellung nach Anspruch 7 gelöst.

### 3. Ausführliche Beschreibung der Erfindung.

Gemäß der vorliegenden Erfindung wird ein Paneel bereitgestellt, das eine Trägerschicht aus einem Kunststoffmaterial und eine Grundierungsschicht umfasst, wobei die Grundierungsschicht auf einer wässrigen Dispersion basiert und ein darauf aufgedrucktes dekoratives Muster (d.h. eine Dekorschicht) umfasst und über der Grundierungsschicht eine Polymerschicht vorgesehen ist. Die Polymerschicht basiert dabei generell bevorzugt auf einem polymerisierbaren Harz, wie insbesondere einem Acrylatharz. Generell bevorzugt weist die ausgehärtete Polymerschicht einen Härtegradienten auf gemäß der eingangs beschriebenen WO 2008/061791 desselben Anmelders

Im Unterschied zum eingangs genannten Stand der Technik DE 10 2006 058 655 A1 stellt die vorliegende Erfindung ein Paneel bereit, das kein separates Dekorpapier erfordert, da das dekorative Muster auf eine auf der Trägerschicht angeordneten Grundierungsschicht unmittelbar aufgedruckt wird bzw. ist.

Gemäß der vorliegenden Erfindung wird weiterhin ein Verfahren zum Herstellen eines Paneels, insbesondere eines Wand-, Decken- oder Fußbodenpaneels bereitgestellt. Bei diesem Verfahren wird in einem ersten Arbeitsschritt eine Trägerschicht aus einem Kunststoffmaterial bereitgestellt. Auf diese Trägerschicht wird anschließend eine Grundierungsschicht basierend auf einer wässrigen Dispersion aufgetragen und ein dekoratives Muster auf diese aufgedruckt. Nach dem Aufdruck des dekorativen Musters auf die Grundierungsschicht wird eine flüssige erste Polymerschicht auf die Grundierungsschicht aufgetragen. In einem weiteren Schritt werden die Grundierungsschicht und die Polymerschicht ausgehärtet. Optional kann zumindest eine zweite Polymerschicht flüssig auf die noch feuchte erste Polymerschicht aufgetragen werden, so dass eine teilweise Vermischung der Beschichtungsmittel stattfindet Die Aushärtung der Grundierungsschicht und der Polymerschicht(en) kann in einem Verfahrensschritt aber auch nacheinander in zwei separaten Verfahrensschritten erfolgen. Unter Härten oder Aushärtung einer Polymerschicht wird hierbei die chemische Reaktion verstanden, die bei der Polymerisation stattfindet. Hiervon zu unterscheiden ist das Trocknen derartiger Schichten, bei dem lediglich der Wassergehalt reduziert bzw. entfernt wird.

Erfindungsgemäß basiert die Trägerschicht auf Polyvinylchlorid bzw. besteht die Trägerschicht im Wesentlichen aus Polyvinylchlorid (und den notwendigen Hilfsstoffen wie Eingangs erwähnt). Polyvinylchlorid hat sich als besonders vorteilhaftes Material zur Ausbildung der Trägerschicht herausgestellt, da dieses Material nicht nur besonders strapazierfähig ist, sondern darüber hinaus auch besonders vorteilhafte trittschallabsorbierende Eigenschaften hat. Alternativ zum bevorzugten Polyvinylchlorid können auch andere Kunststoffe wie Polypropylen oder Polyethylen oder sogenannte WPC's (Wood Polymer Composites) eingesetzt werden, je nachdem, welche Eigenschaften das Paneel aufweisen soll.

In einer weiteren bevorzugten Ausführungsform ist die Trägerschicht aus einem mit Weichmachern versetztem Kunststoffmaterial gebildet, wobei hierfür entsprechende Weichmacher, insbesondere Diethylexylphthala und/oder Diisonoylphthalat verwendet werden. In die Trägerschicht werden dabei zwischen 5 bis 50 Gewichts-%, bevorzugt zwischen 10 bis 20 Gewichts-%, besonderes bevorzugt zwischen 12 bis 17 Gewichts-% eines geeigneten Weichmachers eingebracht.

In einer weiteren bevorzugten Ausführungsform weist die Trägerschicht eine Dicke zwischen 3 und 20 mm, bevorzugt zwischen 4 und 15 mm, mehr bevorzugt zwischen 3 und 12 mm und am meisten bevorzugt zwischen 4 und 10 mm auf. Es hat sich herausgestellt, dass diese Bereiche für die Dicken der Trägerschicht eine ausreichende Stabilität während des Herstellungsverfahrens bereitstellen und darüber hinaus eine ausreichend hohe Trittschallabsorption und Formstabilität des Paneels bereitstellen.

In einer besonders bevorzugten Ausführungsform der Erfindung ist unter der Grundierungsschicht eine Primerschicht auf das Trägermaterial aufgetragen, bzw. vorgesehen. Die Primerschicht oder Haftvermittlerschicht verbessert dabei die Haftung der Grundierungsschicht auf dem Trägermaterial. Dem Fachmann ist eine Reihe von geeigneten Primerschichten bekannt, die von entsprechenden chemischen Fachfirmen kommerziell erhältlich sind.

In einer bevorzugten Ausführungsform weist das Paneel eine Primerschicht mit einer Flächenmasse zwischen 3 bis 20 g/m², bevorzugt mit einer Flächenmasse zwischen 5 bis 15 g/m², besonders bevorzugt mit einer Flächenmasse zwischen 7 und 12 g/m² und am meisten bevorzugt mit einer Flächenmasse zwischen 8 bis 10 g/m² auf.

Erfindungsgemäß wird zum Drucken des dekorativen Musters eine polymerisierbare Druckfarbe (Tinte) verwendet, insbesondere basierend auf polymerisierbaren Acrylatharzen und/ oder N-Vinylcaprolactam (eines flüssigen Reaktivverdünners), wie er von der BASF angeboten wird. Üblicherweise kommen im Stand der Technik als Druckfarbe Dispersionsfarben zum Einsatz, bestehend aus dem Fachmann geläufigen Verfahren angeriebenen Pigmentmischungen und Bindemitteln (gemein als Verschnitt bezeichnet) auf Basis von Casein oder Acrylatbindemitteln. Diese Dispersionsfarben werden regelmäßig bei dem üblicherweise zum Einsatz kommenden Tiefdruckverfahren verwendet. Dispersionsfarben sind Druckfarben, die in der Regel aus drei Hauptbestandteilen bestehen, nämlich (a) einem Lösungsmittel (üblicherweise Wasser), (b) Bindemittel in Form von Kunststoffpolymeren (Acrylate), die sich bei Verdunstung des Lösungsmittels zusammenlagern und eine feste Schicht bilden, sowie (c) Farbpigmente zur Erzeugung der gewünschten Deckung und des gewünschten Farbtons. Die Trocknung dieser Dispersionsfarben erfolgt also nicht durch eine Polymerisation, sondern durch ein Verflüchtigen des Lösungsmittels, da die Bindemittel bereits als Polymere vorliegen. Die in der Dispersion enthaltenen Polymere verbinden sich bei Verflüssigung des Bindemittels auf rein physikalische Weise und bilden eine feste, geschlossene Schicht.

Die Anmelder haben nun überraschend festgestellt, dass verbesserte Hafteigenschaften des Schichtsystems erreicht werden können, wenn nicht die üblichen Dispersionsfarben verwendet werden, sondern stattdessen polymerisierbare Druckfarben verwendet werden. Dies gilt insbesondere bei der bevorzugten Anwendung mit einer Polymerschicht, insbesondere mit Härtegradient. Der positive Effekt ist besonders ausgeprägt, wenn die Druckfarbe der Dekorschicht (d.h. des dekorativen Musters) und die Polymerschicht gemeinsam ausgehärtet bzw. polymerisiert werden (wenn die Dekorschicht direkt aufgedruckt wird, wie etwa im Digitaldruck, besteht die Dekorschicht quasi aus der Druckfarbe). Wie oben erwähnt wird unter Aushärtung einer Polymerschicht beziehungsweise einer polymerisierbaren Druckfarbe (wie polymerisierbare Acrylate bzw. UV-reaktive Farben im Allgemeinen) hier die chemische Reaktion verstanden, die bei der Polymerisation stattfindet. Hiervon zu unterscheiden ist das Trocknen derartiger Schichten, bei dem lediglich das Lösungsmittel, wie etwa der Wassergehalt der Druckfarbe beziehungsweise der Polymerschichten verdunstet bzw. auf rein physikalische Weise reduziert wird.

Durch die gemeinsame Aushärtung (Polymerisation) der polymerisierbaren Bestandteile (Acrylatsysteme und/oder N-Vinylcaprolactam) von Druckfarbe und Polymerschicht erfolgt eine chemische Vernetzung an der Grenzfläche der beiden Schichten, von der angenommen wird, dass sie für die verbesserte Haftung der Schichten verantwortlich ist. Die herkömmlich verwendeten Dispersions-Druckfarben weisen keine polymerisierbaren Bestandteile auf, so dass keine derartige chemische Vernetzung zwischen Druckfarbe, also der Dekorschicht, und der Polymerschicht stattfindet.

Polymerisierbare Bestandteile wie sie bei der vorliegenden Erfindung bevorzugt zum Einsatz kommen umfassen als Hauptbestandteile Acrylate, wie insbesondere Acrylat-Monomere, -Oligomere und optional Fotoinitiatoren aber auch N-Vinylcaprolactam als flüssigen Reaktivverdünner. N-Vinylcaprolactam kann der Druckfarbe zusätzlich zu den Acrylaten als Verdünner zugegeben werden und polymerisiert zusammen mit diesen aus. Alternativ ist es auch möglich auf die Acrylate zu verzichten und eine entsprechend größere Menge an N-Vinylcaprolactam vorzusehen, da das N-Vinylcaprolactam selbst polymerisiert werden kann. Details hierzu sind dem Fachmann beispielhaft aus der deutschen Veröffentlichungsschrift DE 197 02 476 A1 bekannt. In bevorzugten Ausführungsformen bestehen die polymerisierbaren Bestandteile daher im Wesentlichen aus N-Vinylcaprolactam. Die Fotoinitiatoren bewirken unter Einwirkung von Strahlung eine Polymerisation der Monomere bzw. Oligomere, wodurch die Druckfarbe schnell aushärtet. Die Verwendung einer Druckfarbe basierend auf einem polymerisierbaren Acrylat zusammen mit einer darauf aufgebrachten Polymerschicht (als Nutzschicht) erlaubt vorteilhaft den Verzicht auf eine Primerschicht, wie sie im Stand der Technik üblicherweise notwendig war, um die Haftung der Polymerschicht auf der Dekorschicht zu verbessern. Es hat sich gezeigt, dass die im Stand der Technik üblicherweise verwendeten Dispersionsfarben nur eine unbefriedigende Haftung mit der darauf aufgebrachten Polymerschicht mit Härtegradient erreichen. Mit der Verwendung eines Primers zwischen der Dekorschicht und der Polymerschicht (Nutzschicht) soll dieser Nachteil im Stand der Technik ausgeräumt werden.

Allgemein bevorzugt sind die für die vorliegende Erfindung verwendeten polymerisierbaren Druckfarben polymerisierbare Acrylatsysteme. Polymerisierbare Druckfarben enthalten als Hauptbestandteile Bindemittel, nämlich reaktive Doppelbindungen enthaltene Harze; polymerisierbare Bestandteile in Form von Monomeren bzw. Oligomeren, wie z.B. etwa Acrylatmonomere und Acrylatoligomere; optional Fotoinitiatoren für strahlenhärtbare Druckfarben; Additive wie etwa das oben erwähnte N-Vinylcaprolactam, Entschäumer, Verlaufsadditive, Verdickungsmittel u.a.; Farbpigmente wie Phthalocyanin-Pigmente, Azofarbstoffe, Indigoide Farbmittel, Anilinschwarz und/ oder Pigmentruße; sowie Füllstoffe zur Erzielung bestimmter physikalisch technischer Eigenschaften. Generell bevorzugt sind die verwendeten Druckfarben für die vorliegende Erfindung weiter strahlenhärtbare, wie insbesondere durch UV-Strahlen härtbare (UVhärtbare) Druckfarben. Besonders bevorzugt ist die Druckfarbe ein UVhärtbares polymerisierbares Acrylatsystem.

Die Grundierung basiert auf einer wässrigen Dispersion (bevorzugt einem wässrigen Acrylatsystem), welche eine geeignete Zusammensetzung aufweist, so dass sie mittels eines Vorhangbeschichtungsverfahrens aufgetragen werden kann. Es hat sich überraschend gezeigt, dass die Verwendung von wässrigen Dispersionen auch auf Kunststoffoberflächen, wie insbesondere auf PVC Oberflächen, zufriedenstellende Hafteigenschaften erreicht. Im Stand der Technik wurde die Grundierung bisher üblicherweise in einem Walzenauftragsverfahren auf die Oberfläche der Trägerschicht aufgetragen. Bei derartigen Walzenauftragsverfahren wird das Beschichtungsmaterial (die Grundierung) direkt von der Walze auf die zu beschichtenden Oberflächen abgegeben oder indirekt über ein Beschichtungsband, das mittels einer Presswalze auf die zu beschichtenden Bauteile gepresst wird. Die Erfinder der vorliegenden Anmeldung haben festgestellt, dass Oberflächen die auf diese Weise hergestellt wurden insbesondere bei fein detaillierten Druckbildern, wie sie typischerweise bei der Nachahmung von Echtholzoberflächen notwendig sind, nicht die eigentlich zu erwartende Auflösung und Schärfe erreichen. Insbesondere kommt es bei Verwendung von polymerisierbaren Druckfarben häufig zu störenden Streifen im Druckbild. Die Erfinder haben nun überraschend festgestellt, dass diese Probleme vermieden werden können, wenn anstatt eines Walzenauftragsverfahrens ein Vorhangbeschichtungsverfahren verwendet wird. Es wird vermutet, dass die Walzen bei Walzenauftragsverfahren, sei es, dass das Beschichtungsmaterial direkt von der Walze auf die zu beschichtende Oberfläche aufgetragen wird oder indirekt über ein Beschichtungsband, aufgrund ihrer Rundung in der übertragenen Beschichtung eine minimale Welligkeit der Oberfläche erzeugen. Die Berge und Täler dieser welligen Oberfläche sind jedoch so klein, dass die so hergestellten Oberflächen mit herkömmlichen Dispersionsfarben gut bedruckt werden können. Es wird jedoch vermutet, dass diese sehr geringe Unebenheit der so beschichteten Oberflächen bei der Verwendung von polymerisierbaren Druckfarben für die genannten Probleme verantwortlich ist. In jedem Fall kann durch das Gießen der Grundierung die unerwünschte Streifenbildung bei der Verwendung von polymerisierbaren Druckfarben (insbesondere polymerisierbaren Acrylatsystemen) wirksam unterbunden werden.

Vorhangbeschichtungsverfahren und entsprechende Anlagen sind dem Fachmann aus dem Stand der Technik (beispielsweise aus der EP 1252 937 A1) vorbekannt, so dass auf eine detaillierte Beschreibung derselben hier verzichtet werden kann. Wichtig ist, dass bei Vorhangbeschichtungsverfahren ein flüssiger Vorhang von Beschichtungsmaterial erzeugt wird, durch den die zu beschichtenden Bauteile geführt werden. Ein Auftrag über Walzen findet nicht statt.

In einer weiteren bevorzugten Ausführungsform weist die Grundierungsschicht eine Flächenmasse zwischen 15 bis 150 g/m², bevorzugt eine Flächenmasse zwischen 30 bis 100 g/m², besonders bevorzugt eine Flächenmasse zwischen 40 und 70 g/m² und am bevorzugtesten eine Flächenmasse zwischen 50 bis 75 g/m² auf. Diese Flächenmasse führen in der bevorzugten Ausführungsform zu einer Dicke der Grundierungsschicht zwischen 5 und 300 µm, bevorzugt zwischen 15 und 200 µm, mehr bevorzugt zwischen 20 und 180 µm und am meisten bevorzugt zwischen 25 und 100 µm. Es hat sich herausgestellt, dass diese Flächenmassen bzw. Dicken der Grundierungsschicht einen optimalen Belag für das darauf aufgedruckte dekorative Muster bereitstellen.

In einer bevorzugten Ausführungsform werden in die Polymerschicht abriebfeste Partikel, insbesondere Korundpartikel, mit einem mittleren Durchmesser von 10 bis 100 µm, bevorzugt 20 bis 80 µm, mehr bevorzugt 25 bis 70 µm und besonders bevorzugt von 30 bis 60 µm eingebettet. Durch die abriebfesten Partikel besteht die Möglichkeit, die Lebensdauer eines erfindungsgemäßen Paneels erheblich zu steigern.

Die Gesamtdicke der Polymerschicht (Nutzschicht) nach dem Aushärten sollte vorzugsweise eine Dicke von 20 - 300 µm haben, mehr bevorzugt von 40 - 250 µm, noch mehr bevorzugt von 50 - 220 µm und am meisten bevorzugt von 60 - 180 µm. Es hat sich herausgestellt, dass diese Schichtdicken einerseits eine gute Abdeckung bzw. Einbindung der Korundpartikel erlauben. Bevorzugte Materialien für die Polymerschicht sind: 1,6 Hexandioldiacrylat, Polyesteracrylat, Polyurethanacrylsäureester und Dipropylendiglycoldiarcylat.

In einer bevorzugten Ausführungsform stellt das dekorative Muster, das auf die Grundierungsschicht beispielsweise mittels eines Digitaldruckverfahrens aufgebracht wurde, die einzige Dekorschicht des erfindungsgemäßen Paneels dar, d.h. es sind keine weiteren Dekorpapiere oder Dekorfolien vorgesehen. Es besteht somit keine Notwendigkeit mehr ein separates Dekorpapier oder dergleichen vorzusehen, was zu einer erheblichen Kostenreduzierung und Verfahrensvereinfachung bei der Herstellung eines erfindungsgemäßen Paneels führt.

Wie eingangs erwähnt, ist gemäß der Erfindung die Druckfarbe der Dekorschicht (des dekorativen Musters) gemeinsam mit der darüber aufgebrachten Polymerschicht ausgehärtet (polymerisiert), nämlich durch eine gemeinsame Bestrahlung derselben. Hierdurch kommt es an der Grenzschicht zwischen der Druckfarbe und der darüber aufgebrachten Polymerschicht(en) teilweise zu einer chemischen Vernetzung der verwendeten Polymere. Es hat sich gezeigt, dass dabei eine besonders gute Haftung der Polymerschicht auf der Trägerschicht erreicht werden kann. Im Stand der Technik war es bisher immer notwendig zusätzlich zwischen der Dekorschicht und der aufgebrachten Polymerschicht einen Primer zu verwenden, um die Haftung der Polymerschicht zu verbessern. Mit Erfindung kann dabei nicht nur auf den Primer verzichtet werden, sondern es hat sich sogar gezeigt, dass die erreichte Haftung der Polymerschicht im Vergleich zu herkömmlichen, primerbasierten Systemen, verbessert werden kann.

Im Folgenden soll die Erfindung anhand zweier nicht beschränkender Beispiele näher erläutert werden:

### Vergleichsbeispiel

### 1: "Paneel mit herkömmlichem indirekten Tiefdruck"

Eine PVC-Trägerschicht mit einer Stärke von 4 mm wird zunächst über ein Walzenauftragswerk mit einem Primer auf Basis einer handelsüblichen wässrigen Acrylatdispersion versehen. In einem nächsten Schritt erfolgt das Glätten der PVC-Trägerschicht über ein Walzenauftragswerk mittels einer Spachtelmasse basierend auf einer hochgefüllten wässrigen Acrylatdispersion. Anschließend wird ein Druckgrund auf Basis einer mit Füllstoffen und Farbpigmenten versetzten wässrigen Acrylatdispersion mittels Gießverfahren appliziert. Nach jedem dieser Beschichtungsschritte erfolgt ein Zwischentrocknen bei Temperaturen zwischen 80 und 200 °C. Die so behandelten PVC-Träger werden einer Druckmaschine im Wesentlichen bestehend aus einer Gravurwalze und einer Gummiwalze für die Übertragung des Druckbildes vom Gravurzylinder auf die Platte zugeführt. Das Druckbild wird über 3 nachgeschaltete Druckwerke erzeugt, wobei durch jedes Druckwerk eine eigene Druckfarbe bestehend aus Farbpigmenten und einer wässrigen Acrylatdispersion aufgetragen wird. Bei einer Imitation eines dunklen Nußbaumholzes werden beispielsweise 5 g/m² Druckfarbe appliziert. Auf die Druckfarbenschicht wird im weiteren Prozess ein handelsüblicher UV-Primer über ein Walzenauftragswerk aufgetragen. Schließlich erfolgt der Auftrag der Polymerschicht wie in der WO 2008/061791 beschrieben, um eine Polymerschicht mit Härtegradient zu erzeugen. Hierzu wird in einem ersten Schritt ein doppelbindungshaltiges, mit Photoinitiatoren versehenes strahlenhärtbares Oligomer appliziert. Auf diese Schicht wird über eine Strukturträgerfolie nass-in-nass eine weitere Schicht aus einem doppelbindungshaltigen, mit Photoinitiatoren versehenen strahlenhärtbaren Oligomers gelegt und mittels einer UV-Strahlung polymerisiert. Nach Abziehen der Folie erhält man die fertige beschichtete Dekorplatte, die in einem weiteren Prozess in Paneele zerteilt werden kann, wobei an diese Paneele bekannte Kopplungselemente angefügt werden. Die so beschichtete Platte wird einem Labortest unterzogen. Beim Gitterschnitttest wird in diesem Fall eine zufriedenstellende 3 erzielt. Generell gilt hier, je dicker die Druckfarbenschicht für die Reproduktion eines Dekors aufgetragen werden muss, desto schlechter fällt das Ergebnis beim Gitterschnitttest aus. Schlechte Gitterschnittwerte haben ein erschwertes Anfräsen von Profilen für die Kopplungselemente zur Folge, da schnell Kantenausbrüche an der Polymerschicht erfolgen.

### Erfindungsgemäßes

### Beispiel 2: "Paneele, bei denen das Muster mit strahlenhärtenden Druckfarben erzeugt wird"

Es wird eine 4 mm starke PVC-Trägerschicht verwendet und wie in Beispiel 1 beschrieben mit wässrigem Primer, Spachtel und Druckgrund versehen. Auf der so behandelten Platte wird mittels Digitaldrucker das gleiche Dekorbild wie in Beispiel 1 erzeugt. Verwendung finden dabei jedoch UV- strahlenhärtende Digitaldruckfarben. Für die Erzeugung des Druckbildes wird eine Farbmenge von etwa 2 g/m² benötigt. Die Farbe wird zunächst mit 150 mJ/cm² (Quecksilber) fixiert. Darauf erfolgt der Auftrag von 2 g/m² einer ersten UV-härtenden Schicht, die vorwiegend Dipropylenglycoldiacrylat enthält, auf diese nicht bestrahlte Schicht wird ein doppelbindungshaltiges, mit Photoinitiatoren versetztes Oligomer wie in Beispiel 1 aufgetragen. Auf diese Schicht wird mittels Strukturgeberfolie eine zweite Oligomerschicht wie in Beispiel 1 aufgelegt. Das Paket wird einer UV-Strahlenquelle zugeführt und dabei wird die strahlenhärtende Schicht polymerisiert. Die daraus resultierende Polymerschicht umfasst die Druckfarbe und alle darüber liegenden Schichten. Auch auf dieser Basis hergestellte Paneele werden einem Labortest unterzogen. Beim Gitterschnitttest treten keinerlei Abplatzungen innerhalb der verschiedenen Beschichtungsebenen auf.

### 4. Beschreibung von bevorzugten Ausführungsformen

Im Folgenden wird die Erfindung anhand der Figuren näher erläutert, wobei:
Fig. 1 eine schematische Darstellung eines erfindungsgemäßen Paneels 10 mit einer Trägerschicht 12 aus Polyvinylchlorid zeigt; und
Fig. 2 eine Anlage zur Beschichtung in schematischer Ansicht zeigt.

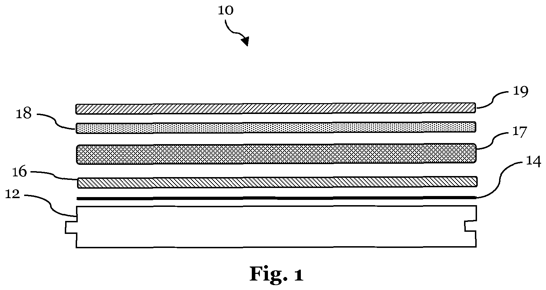

In Fig. 1 ist die Trägerschicht 12 gezeigt, die an ihren jeweiligen Kanten Feder-Nutverbindungen aufweist, die es erlauben einzelne Paneele 10 miteinander zu verbinden.

Oberhalb der Trägerschicht 12 ist eine Primerschicht 14 vorgesehen. Auf der Primerschicht 14 ist in dem gezeigten Ausführungsbeispiel eine Ausgleichsschicht 16 angeordnet. Die Ausgleichsschicht 16 besteht dabei aus einer Spachtelmasse aus einer hochgefüllten Acrylatdispersion. Auf der Ausgleichsschicht 16 ist eine Grundierungsschicht 17 angeordnet. Auf der Oberseite der Grundierungsschicht 17 ist ein dekoratives Muster (Dekorschicht) 18 aufgedruckt, vorzugsweise mittels eines Digitaldruckverfahrens. Dieses dekorative Muster kann je nach Anwendung ein beliebiges Muster darstellen. Über Grundierung und Dekorschicht ist ein mittels UV-Bestrahlung aushärtbares Polymerschichtsystem 19 vorgesehen.

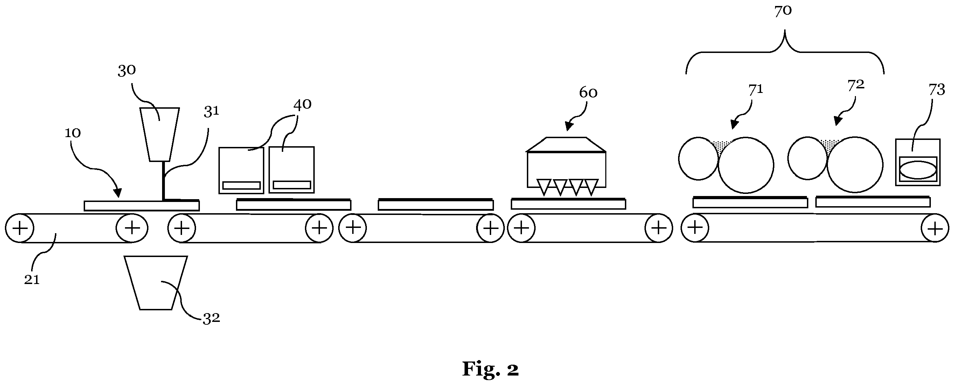

Im Folgenden soll anhand der Fig. 2 beispielhaft die Herstellung eines erfindungsgemäßen Paneels, bzw. das erfindungsgemäße Verfahren, beschrieben werden. Fig. 2 zeigt schematisch eine Beschichtungsanlage zur Beschichtung von Platten bzw. Paneelen 10. Die Platten 10 sind beispielsweise große PVC-Platten mit einer Dicke von 4-8mm und werden in abschließenden, nicht gezeigten, Verarbeitungsschritten in die gewünschte Größe und Form geschnitten, wie dies aus dem Stand der Technik bekannt ist. Die Platten 10 werden über eine Rollenförderanlage 21 durch die verschiedenen Stationen der Beschichtungsanlage geführt. Die dargestellten Beschichtungsstationen sind nicht abschließend zu verstehen, sondern dienen nur beispielhaft der Erläuterung des erfindungsgemäßen Verfahrens. Vor, hinter und zwischen den gezeigten Stationen können weitere Bearbeitungsstationen vorgesehen sein, wie beispielsweise weitere Trocknungsstationen, Stationen zur Aufbringung von Primern, Stationen zur Aufbringung von Spachteln usw. In der ersten dargestellten Station 30 wird die Grundierung mittels eines flüssigen Vorhangs 31 von Beschichtungsmaterial auf eine Hauptoberfläche der Platte 10 aufgetragen. Der flüssige Vorhang 31 erstreckt sich über die komplette Plattenbreite und die Platten werden durch diesen Vorhang transportiert und dabei beschichtet. Unterhalb der Vorrichtung 30 zur Ausgabe des Vorhangs befindet sich ein Auffangbehälter 32 in den der flüssige Vorhang fällt, wenn keine Platte durch den Vorhang hindurch geführt wird, wie beispielsweise bei der Lücke zwischen zwei aufeinanderfolgenden Platten. Als Beschichtungsmaterial für die Grundierung wird eine wässrige Acrylat-Dispersion verwendet. In einer darauf folgenden Trocknungsstation 40 wird die aufgetragene Grundierung mit Heißluft getrocknet, d.h. der wässrigen Acrylat-Dispersion wird das Wasser entzogen.

In Station 60 wird mittels eines Digitaldrucks ein dekoratives Dekor, wie insbesondere ein Echtholzdekor, auf die so behandelte Grundierung aufgedruckt. Nach dem Druck wird in der Beschichtungsstation 70 eine Polymerschicht aufgetragen. Die Polymerschicht wird mit einem Härtegradienten aufgetragen, so dass die Härte der Polymerschicht mit zunehmender Tiefe von der Oberfläche der Polymerschicht her gesehen im Wesentlichen kontinuierlich abnimmt. Zu diesem Zweck wird in einer ersten Beschichtungseinheit 71 eine erste Polymerschicht basierend auf einem polymerisierbaren Acrylatsystem aufgetragen. Auf diese erste Polymerschicht wird in Station 72 eine weitere Polymerschicht Nass-in-Nass aufgetragen. Die zweite Polymerschicht weist beispielsweise einen höheren Doppelbindungsanteil auf, wie es im Detail in der oben erwähnten Anmeldung zum Härtegradienten beschrieben ist. Die beiden Polymerschichten werden in den Stationen 71 und 72 Nass-auf-Nass aufgetragen, so dass es an der Grenzfläche der beiden Schichten zu einer teilweisen Vermischung kommt. In Station 73 werden die beiden Polymerschichten unter Einwirkung von UV-Strahlung gemeinsam ausgehärtet.

Bevorzugt ist die Station 60 eine Digitaldruckstation und verwendet eine Druckfarbe basierend auf einem polymerisierbaren Acrylat. Erfindungsgemäß findet zwischen den Stationen 60 und 70 keine Aushärtung der Druckfarbe statt, sondern allenfalls ein Zwischentrocknungsschritt bei welchem Schritt dem polymerisierbaren Acrylat der Druckfarbe etwas Feuchtigkeit entzogen wird. In der Aushärtstation 73 werden dann die Druckfarbe und die ersten und zweiten Polymerschichten gemeinsam ausgehärtet, was zu einer besonders widerstandsfähigen Oberfläche führt.

## Patentansprüche

1. Paneel, insbesondere ein Wand-, Decken- oder Fußbodenpaneel, umfassend eine Trägerschicht (12) basierend auf Polyvinylchlorid und eine Grundierungsschicht (17), wobei die Grundierungsschicht (17) ein darauf aufgedrucktes dekoratives Muster (18) umfasst und über der Grundierungsschicht in Kontakt mit dem dekorativen Muster eine ausgehärtete Polymerschicht (19) vorgesehen ist, und wobei die Druckfarbe eine polymerisierbare Druckfarbe ist und die Druckfarbe und die Polymerschicht gemeinsam durch Strahlung ausgehärtet wurden, **dadurch gekennzeichnet, dass** die Grundierungsschicht (17) auf einer wässrigen Dispersion basiert.

2. Paneel nach einem der vorhergehenden Ansprüche, **dadurch gekennzeichnet, dass** die Polymerschicht (19) einen Härtegradienten aufweist, so dass die Härte der Polymerschicht mit zunehmender Tiefe von der Oberfläche der Polymerschicht her gesehen im Wesentlichen kontinuierlich abnimmt.

3. Paneel nach einem der vorhergehenden Ansprüche, **dadurch gekennzeichnet, dass** die zum Drucken des dekorativen Musters (18) verwendete Druckfarbe ein polymerisierbares Acrylat enthält und/oder N-Vinylcaprolactam.

4. Paneel nach einem der vorhergehenden Ansprüche, **dadurch gekennzeichnet, dass** die zum Drucken des dekorativen Musters (18) verwendete Druckfarbe ein polymerisierbares Acrylat enthält und N-Vinylcaprolactam enthält in einem Gewichtsanteil (%) in der Druckfarbe von 2 bis 50, mehr bevorzugt 5 bis 40 und am meisten bevorzugt von 10 bis 30 %.

5. Paneel nach einem der vorhergehenden Ansprüche, **dadurch gekennzeichnet, dass** das dekorative Muster (18) im Digitaldruck aufgebracht wurde.

6. Paneel nach einem der vorhergehenden Ansprüche, **dadurch gekennzeichnet, dass** neben dem dekorativen Muster (18) auf der Grundierungsschicht (17) keine weitere Dekorschichten, insbesondere kein Dekorpapier oder Dekorfolie angebracht sind.

7. Verfahren zur Herstellung eines Paneels, insbesondere eines Wand-, Decken- oder Fußbodenpaneels, umfassend folgende Schritte in der angegebenen Reihenfolge:
(i) Bereitstellen einer Trägerschicht basierend auf Polyvinylchlorid;
(ii) Auftragen einer Grundierungsschicht aus einer wässrigen Dispersion;
(iii) Aufdrucken eines dekorativen Musters auf und in Kontakt mit der Grundierungsschicht, wobei die Druckfarbe eine polymerisierbare Druckfarbe ist;
(iv) Auftragen zumindest einer ersten Polymerschicht auf die Grundierungsschicht in Kontakt mit dem dekorativen Muster;
(v) Härten der Druckfarbe und der aufgetragenen Polymerschicht gemeinsam mittels Strahlung.

8. Verfahren nach Anspruch 7, **gekennzeichnet durch** folgenden zusätzlichen Schritt nach Schritt (iv): Auftragen zumindest einer zweiten flüssigen Polymerschicht auf die noch feuchte erste Polymerschicht, so dass eine teilweise Vermischung der Polymerschichten stattfindet, und danach die Druckfarbe und die aufgetragenen Polymerschichten gemeinsam durch Strahlung gehärtet werden.

9. Verfahren nach Anspruch 8, **dadurch gekennzeichnet, dass** der nach Schritt (iv) folgende zusätzliche Schritt und Schritt (v) so durchgeführt werden, dass die ausgehärtete Polymerschicht einen Härtegradient aufweist, wobei die Härte der Beschichtung mit zunehmender Tiefe von der Oberfläche der resultierenden Beschichtung her gesehen abnimmt.

10. Verfahren nach einem der vorhergehenden Verfahrensansprüchen, **dadurch gekennzeichnet, dass** die polymerisierbare Druckfarbe einem polymerisierbaren Acrylat und/oder N-Vinylcaprolactam basiert.

11. Verfahren nach einem der vorhergehenden Verfahrensansprüchen, **dadurch gekennzeichnet, dass** die polymerisierbare Druckfarbe enthält: a) ein polymerisierbares Acrylat; sowie b) N-Vinylcaprolactam in einem Gewichtsanteil (%) in der Druckfarbe von 2 bis 50, mehr bevorzugt 5 bis 40 und am meisten bevorzugt von 10 bis 30 %.

12. Verfahren nach einem der vorhergehenden Verfahrensansprüchen, **dadurch gekennzeichnet, dass** die Grundierung in Schritt (ii) mittels eines Vorhangbeschichtungs-Verfahrens aufgetragen wird.

13. Verfahren nach einem der vorhergehenden Verfahrensansprüche, **dadurch gekennzeichnet, dass** nach Schritt (ii) die Grundierung vor Schritt (iii) getrocknet wird.

14. Verfahren nach einem der vorhergehenden Verfahrensansprüchen, **dadurch gekennzeichnet, dass** die Dekorschicht mittels Digitaldruck aufgebracht wird.

## Claims

1. A panel, in particular a wall, ceiling or floor panel, comprising a carrier layer (12) based on polyvinyl chloride and a base layer (17), wherein the base layer (17) comprises a decorative pattern (18) printed thereon and a cured polymer layer (19) is provided over the base layer in contact with the decorative pattern, and wherein the printing ink is a polymerizable printing ink and the printing ink and the polymer layer have been cured together by radiation, **characterized in that** the base layer is based on an aqueous dispersion.

2. The panel according to any one of the preceding claims, **characterized in that** the polymer layer (19) has a hardness gradient such that the hardness of the polymer layer decreases substantially continuously with increasing depth as viewed from the surface of the polymer layer.

3. The panel according to any one of the preceding claims, **characterized in that** the printing ink used for printing the decorative pattern (18) contains a polymerizable acrylate and/or N-vinylcaprolactam.

4. The panel according to any one of the preceding claims, **characterized in that** the printing ink used for printing the decorative pattern (18) comprises a polymerizable acrylate and comprises N-vinylcaprolactam in a proportion by weight (%) in the printing ink of from 2 to 50, more preferably from 5 to 40 and most preferably from 10 to 30%.

5. The panel according to any one of the preceding claims, **characterized in that** the decorative pattern (18) has been applied by digital printing.

6. The panel according to any one of the preceding claims, **characterized in that**, in addition to the decorative pattern (18), no further decorative layers, in particular no decorative paper or decorative foil, are applied to the base layer (17).

7. A method of manufacturing a panel, in particular a wall, ceiling or floor panel, comprising the following steps in the given order:
(i) providing a carrier layer based on polyvinyl chloride;
(ii) applying a base layer of an aqueous dispersion;
(iii) printing a decorative pattern on and in contact with the base layer, wherein the printing ink is a polymerizable printing ink;
(iv) applying at least a first polymer layer to the base layer in contact with the decorative pattern;
(v) curing the printing ink and the applied polymer layer together by means of radiation.

8. The method according to claim 7, **characterized by** the following additional step after step (iv): applying at least a second liquid polymer layer to the still wet first polymer layer so that partial mixing of the polymer layers occurs, and thereafter curing the ink and the applied polymer layers together by radiation.

9. The method according to claim 8, **characterized in that** the additional step following step (iv) and step (v) are carried out such that the cured polymer layer has a hardness gradient, wherein the hardness of the coating decreases with increasing depth as viewed from the surface of the resulting coating.

10. The method according to any one of the preceding method claims, **characterized in that** the polymerizable printing ink is based on a polymerizable acrylate and/or N-vinylcaprolactam.

11. The method according to one of the preceding method claims, **characterized in that** the polymerizable printing ink contains: a) a polymerizable acrylate; and b) N-vinylcaprolactam in a proportion by weight (%) in the printing ink of from 2 to 50, more preferably from 5 to 40 and most preferably from 10 to 30%.

12. The method according to any of the preceding method claims, **characterized in that** in step (ii) the base layer is applied by means of a curtain coating method.

13. The method according to any one of the preceding method claims, **characterized in that**, after step (ii), the base layer is dried before step (iii).

14. The method according to any of the preceding method claims, **characterized in that** the decorative layer is applied by means of digital printing.

## Revendications

1. Panneau, en particulier panneau de mur, de plafond ou de sol, incluant une couche porteuse (12) à base de poly(chlorure de vinyle) et une couche de fond (17), la couche de fond (17) incluant un motif décoratif (18) imprimé dessus et une couche polymère durcie (19) étant prévue sur la couche de fond en contact avec le motif décoratif, le colorant d'impression étant un colorant d'impression polymérisable et le colorant d'impression et la couche polymère étant durcis conjointement par irradiation, **caractérisé en ce que** la couche de fond (17) est à base d'une dispersion aqueuse.

2. Panneau selon une des revendications précédentes, **caractérisé en ce que** la couche polymère (19) présente un gradient de dureté tel que la dureté de la couche polymère diminue de manière globalement continue à mesure qu'augmente la profondeur à partir de la surface supérieure de la couche polymère.

3. Panneau selon l'une des revendications précédentes, **caractérisé en ce que** le colorant d'impression utilisé pour imprimer le motif décoratif (18) contient un acrylate polymérisable et/ou du N-vinylcaprolactame.

4. Panneau selon l'une des revendications précédentes, **caractérisé en ce que** le colorant d'impression utilisé pour imprimer le motif décoratif (18) contient un acrylate polymérisable et du N-vinylcaprolactame dans une proportion en poids (%) dans le colorant d'impression de 2 à 50, plus préférentiellement de 5 à 40 et le plus préférentiellement de 10 à 30 %.

5. Panneau selon l'une des revendications précédentes, **caractérisé en ce que** le motif décoratif (18) a été appliqué par impression numérique.

6. Panneau selon une des revendications précédentes, **caractérisé en ce qu'**en dehors du motif décoratif (18), aucune autre couche décorative, en particulier aucun papier décoratif ou feuille décorative, ne sont appliqués sur la couche de fond (17).

7. Procédé de fabrication d'un panneau, en particulier d'un panneau de mur, de plafond ou de sol, incluant les étapes suivantes dans l'ordre indiqué :
(i) préparation d'une couche porteuse à base de poly(chlorure de vinyle) ;
(ii) application d'une couche de fond à partir d'une dispersion aqueuse ;
(iii) impression d'un motif décoratif sur et en contact avec la couche de fond, le colorant d'impression étant un colorant d'impression polymérisable ;
(iv) application d'au moins une première couche polymère sur la couche de fond en contact avec le motif décoratif ;
(v) durcissement du colorant d'impression et de la couche polymère appliquée conjointement au moyen d'une irradiation.

8. Procédé selon la revendication 7, **caractérisé par** une étape supplémentaire après l'étape (iv) : application d'au moins une seconde couche polymère liquide sur la première couche polymère encore humide, de façon qu'ait lieu un mélange partiel des couches polymères, et ensuite durcissement conjoint par irradiation du colorant d'impression et des couches polymères appliquées.

9. Procédé selon la revendication 8, **caractérisé en ce que** l'étape supplémentaire après l'étape (iv) et l'étape (v) sont réalisées de façon que la couche polymère durcie présente un gradient de dureté, la dureté de l'enduction diminuant à mesure qu'augmente la profondeur à partir de la surface supérieure de l'enduction résultante.

10. Procédé selon une des revendications de procédé précédentes, **caractérisé en ce que** le colorant d'impression polymérisable est à base d'un acrylate polymérisable et/ou de N-vinylcaprolactame.

11. Procédé selon une des revendications de procédé précédentes, **caractérisé en ce que** le colorant d'impression polymérisable contient : a) un acrylate polymérisable ; ainsi que b) du N-vinylcaprolactame dans une proportion en poids (%) dans le colorant d'impression de 2 à 50, plus préférentiellement de 5 à 40 et le plus préférentiellement de 10 à 30 %.

12. Procédé selon une des revendications de procédé précédentes, **caractérisé en ce qu'**à l'étape (ii) la couche de fond est appliquée au moyen d'un procédé d'enduction au rideau.

13. Procédé selon une des revendications de procédé précédentes, **caractérisé en ce que**, après l'étape (ii), la couche de fond est séchée avant l'étape (iii).

14. Procédé selon une des revendications de procédé précédentes, **caractérisé en ce que** la couche décorative est appliquée par impression numérique.
